# EUROPEAN PATENT APPLICATION

(11) **EP 1 067 472 A1**
(43) Date of publication of application: **10.01.2001**
(21) Application number: 99850117.5
(22) Date of filing: 05.07.1999
(51) Int. Cl.: G06F 17/60, G07F 7/10

(54) **Method for sending invoices/account statements**

(71) Applicant: Swedgiro AB, 10500 Stockholm (SE)
(72) Inventor: Holm, Per-Robert, 131 50 Saltsjö-Duvnäs (SE)
(74) Representative: Karlström, Lennart

(57) **Abstract**

The present invention relates to a method for sending invoices/account statements, especially of invoices/account statements issued at regular time intervals. An e-mail is sent to a client informing him that he has an invoice/account statement to collect, whereupon the client after having read the e-mail enters a web page on which the invoice/account statement is stored, and collects the invoice/account statement.

## Description

The present invention relates to a method for sending invoices/account statements, especially of invoices/account statements issued at regular time intervals.

For companies that regularly send invoices/account statements to their clients, such as e.g. telephone companies, electric-power suppliers, newspaper and magazine publishers, etc., the number of invoices/account statements to be sent can be overwhelming. The invoices/account statements have to be printed and mailed to the clients.

Even if many clients during the last years may have signed a contract that the invoices from the company are to be paid by an automatic payment process, meaning that the company is allowed to draw the debited sum from a bank account of the client, the company still usually will have to send an invoice or an account statement to the client so he will know the sum to be drawn from his account. This means that the company still has to print and mail an invoice or an account statement to the client.

In recent years e-mail has been widely spread, but it has not been considered suitable for sending invoices. The reason is mainly that the many e-mails fail to reach their destination, and for a secure sending of invoices the company issuing the invoice must be sure of that the invoice really reaches the client. It must also be guaranteed that the invoice not is sent to anyone else than the client in question.

It is therefore an object of the present invention to find a solution so that invoices/account statements can be distributed by e-mail in a safe manner, and so that the company issuing the invoice/account statement can be sure of that the invoice/account statement really has reached the client.

The above object is fulfilled by a method for sending invoices/account statements according to the invention, wherein an e-mail is sent to the client informing him that he has an invoice/account statement to collect, whereupon the client after having read the e-mail enters a specific web page on a web server on which the invoice/account statement is stored, and collects the invoice.

It is also an object of the present invention to provide a method for accomplishing a payment instruction for an invoice received.

This object is also met by a special feature of method according to the invention, as defined in claim 4.

The invention will now be described in further detail, in the form of non-limiting embodiments of the invention.

The present invention relates to a method for sending invoices/account statements, especially of invoices/account statements issued at regular time intervals. At present companies that regularly issue invoices/account statements to their clients every time has to print and mail the invoice/account statement to the client. However, some of the clients may have reached an agreement to have the invoices paid by an automatic payment process, wherein the company is allowed to draw the debited sum from a bank account of the client. The company still usually will have to send an invoice or an account statement to the client so he will know the sum to be drawn from his bank account. This means that the company still has to print and mail an invoice/account statement to the client.

The method according to the invention is intended to be initiated in that the company issuing the invoice/account statement, together with the invoice/account statement encloses a form asking the client whether he would prefer to receive future invoices/account statements by e-mail or not. If the client is interested he completes and signs the enclosed form, and returns the form to the issuer. The information to be completed by the client is the e-mail-address to which the invoices/account statements are to be sent, and also information about a bank account from which the invoices are to be paid after accept by the client for each invoice. Preferably the client also indicates a personally chosen password, which he is to use when he receives the future invoices/account statements by e-mail.

When the issuer receives a positive response from a client the information from the filled in form is stored in a database of the issuer. Next time the issuer is to issue invoices/account statements a data file including information for the preparation of invoices/account statements is matched with the database containing information about e-mail clients. For clients who have chosen e-mail notification of invoices/account statements, the information to be shown on the invoices/account statements is stored in the database, and an e-mail is sent to the client notifying him of that he has received an invoice/account statement. An individual web page is also created for each client, including the information normally appearing on an invoice/account statement. The client will only have access to his own web page, as the access to the web pages is protected by the password given by each individual client.

The client receives an e-mail notifying him of that he has an invoice/account statement to collect. Together with the information is also preferably included a link to the web page where he can collect his invoice/account statement. By clicking on the link a connection to the web page is established. However, to avoid that anyone else than the client can have access to the web page, the client has to enter his password before the information on the web page can be displayed on the screen. The appearance of the invoice/account statement on the screen will preferably be exactly the same as on the printed invoices/account statements. When the client collects his invoice/account statement, this is registered in the issuers database, preferably by registering the date and time for collection of the invoice/account statement.

The client who has received an invoice/account statement can print it on his own printer if he wants a printed documentation of his invoices/account statements, but the information can of course also be stored in the memory of the computer if the client wants to store the invoices/account statements received. In the event the client has decided to pay the invoices manually, he has to attend to the payment himself in the way he uses to. However, according to a special feature of the invention, the client may have another option for payment of the invoice.

If the client has informed the issuer of the invoices about a bank account from which he wants to pay his invoices, this information is registered in the database of the invoice issuer. When an invoice/account statement is prepared based on the information in the database and being made as an individual web page for the client, the additional information about a registered bank account gives rise to the creation of a click button on the web page. When the client has collected his invoice he can then also click on the screen button to send an instruction back to the database for the payment of the invoice by withdrawal from the previously registered bank account. The click button will preferably be programmed so that the client will not have to do anything but click on the button to accept payment of the invoice. If the client in this situation decides not to click on the button to have the invoice paid, he will have to pay the invoice manually.

When clicking on the payment button, and when the issuer receives the instruction for payment, a payment confirmation will be sent, preferably directly, to the client. An e-mail can also be sent to the client later confirming the instruction, eventually only a few days before the due date for payment to remind the client of that the necessary amount has to be available at his bank account.

Payment of the invoice by withdrawal from a bank account as accepted by the client by clicking on the click button will normally take place on the actual due date for payment.

A predetermined time after that the e-mails informing about the issuance of the invoices/account statements have been sent from the issuer to the clients a check is made in the database of the issuer to see if all invoices/account statements have been collected by the clients or not. If all invoices/account statements still have not been collected by their receivers, the clients, an invoice/account statement is printed and mailed to those clients that have not collected their invoices/account statements. In this way the issuer will have a high degree of certainty that all invoices/account statements reach their destinations.

In the description above there has been used the expression issuer for the party that issues the invoices/account statements and also receives the payment therefore. By issuer is meant both the companies that have a debt to collect, as well as any service provider that assists in the handling of the invoices/account statements or the payment thereof. It might be a combination between the companies and the service provider, making different parts of the handling.

By the present invention the initially mentioned problems with the distribution of invoices/account statements by e-mail have been solved in an efficient and safe manner, that especially would be useful for smaller clients, such as smaller companies and private persons. The method can be used without the use of any special software by the client and without the use of any additional hardware equipment. The only requirement on the client is that he has access to a PC and to the Internet, and has an e-mail-address on which he can be reached.

## Claims

1. Method for sending invoices/account statements, **characterised** in that an e-mail is sent to a client informing him that he has an invoice/account statement to collect, whereupon the client after having read the e-mail enters a web page on which the invoice/account statement is stored, and collects the invoice/account statement.

2. Method according to claim 1, **characterised** in that the e-mail includes a link to the web page.

3. Method according to claim 1 or 2, **characterised** in that the client has to enter a password to be connected to the web page.

4. Method according to any preceding claim, **characterised** in that the client by clicking on a button can send an instruction for paying the invoice from a previously registered bank account.

5. Method according to claim 4, **characterised** in that a confirmation of the receipt of the payment instructions is sent to the client.

6. Method according to claim 1, **characterised** in that an invoice will be mailed to the client if the client has failed to collect the invoice within a predetermined time after sending of the e-mail.
